(19) Europäisches Patentamt
European Patent Office
Office européen des brevets

(11) Veröffentlichungsnummer: 0 332 032 B1

(12) **EUROPÄISCHE PATENTSCHRIFT**

(45) Veröffentlichungstag der Patentschrift:
04.09.91 Patentblatt 91/36

(51) Int. Cl.⁵: **B29C 67/20, B29B 7/86,**
// B29K75:00, B29K105:04

(21) Anmeldenummer: 89103545.3

(22) Anmeldetag: 01.03.89

(54) **Verfahren und Vorrichtung zum Beladen mindestens einer fliessfähigen Reaktionskomponente mit Gas, insbesondere in geringen Mengen, für die Herstellung von Schaumstoffen, insbesondere Polyurethanschaumstoffen.**

(30) Priorität: 11.03.88 DE 3808082

(43) Veröffentlichungstag der Anmeldung:
13.09.89 Patentblatt 89/37

(45) Bekanntmachung des Hinweises auf die Patenterteilung:
04.09.91 Patentblatt 91/36

(84) Benannte Vertragsstaaten:
AT BE CH DE ES FR GB IT LI NL

(56) Entgegenhaltungen:
EP-A- 0 110 244
DD-A- 120 830
DE-A- 3 502 071

(73) Patentinhaber: BAYER AG
W-5090 Leverkusen 1 Bayerwerk (DE)

(72) Erfinder: Krippl, Kurt
Niederstrasse 104
W-4019 Monheim (DE)
Erfinder: Schulte, Klaus, Dipl.-ing.
Kurt-Schumacher-Ring 91b
W-5090 Leverkusen 1 (DE)

EP 0 332 032 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren und eine Vorrichtung zum Beladen mindestens einer fließfähigen Reaktionskomponente mit Gas, insbesondere in geringen Mengen, für die Herstellung von Schaumstoffen, insbesondere Polyurethanschaumstoffen, wobei die Reaktionskomponente kontinuierlich in einen unter Druck stehenden Begasungsbehälter eingeführt wird, in dessen oberem Bereich ein Gaspolster aufrechterhalten wird, aus welchem mittels eines Hohlrührers Gas angesaugt und in die darunter befindliche Reaktionskomponente im unteren Bereich des Begasungsbehälters eindispergiert wird, und die nunmehr mit Gas beladene Reaktionskomponente zur Weiterverarbeitung aus dem Begasungsbehälter abgeführt wird.

Es ist allgemein bekannt, daß zur Herstellung von Schaumstoffen ein gewisser Gasgehalt, welcher je nach chemischem System der Reaktionskomponenten verschieden ist, bei der Reaktion die Zellbildung begünstigt. Zur Herstellung von Polyurethanschaumstoffen aus Polyol und Isocyanat belädt man in der Regel die Polyolkomponente mit Gas, weil diese höhere Viskosität aufweist.

Bisher ging man davon aus, daß eine möglichst hohe Gasbeladung die Schäumreaktion am meisten begünstigt. Insbesondere bei RIM-Systemen (reaction injection moulding) belädt man die Polyolkomponente mit 20 bis 70 Vol.-% Gas. Das mit Gas beladene Reaktionsgemisch besitzt bessere Fließeigenschaften, treibt gleichmäßiger auf und bewirkt im Formwerkzeug von innen heraus einen Nachdruck, wodurch Oberflächenstörungen, wie Einfallstellen, am hergestellten Formteil vermieden werden.

Dementsprechend sind Verfahren und Vorrichtungen entwickelt worden, um möglichst viel Gas in mindestens eine der Reaktionskomponenten einzudispergieren. So ist es bekannt (EP-OS 175252 ; "Kunststoffe" (1984) Heft 11, Seite 659/660), eine Reaktionskomponente diskontinuierlich mit Gas zu beladen, indem man einem Vorratsbehälter eine kleinen Begasungsbehälter zuordnet, welcher einen Hohlrührer aufweist, wobei dieser Hohlrührer aus einem im oberen Bereich des Begasungsbehälters aufrechterhaltenen Gaspolster Gas ansaugt und mittels seiner perforierten Rührflügel in die darunter befindliche Reaktionskomponente eindispergiert. Dabei wird die Komponente im Kreislauf gepumpt und laufend die Dichte als Maß für die Gasbeladung gemessen. Ist der Sollwert der Dichte erreicht, wird der Hohlrührer außer Betrieb gesetzt und wieder betätigt, sobald die Dichte den Sollwert überschreitet. Zum Eindispergieren kleiner Gasmengen ist diese Technik nicht geeignet, weil die Gasbeladung nicht mit der notwendigen Genauigkeit erfolgen kann. Es ist nämlich erforderlich, die begaste Komponente im Vorratsbehälter zu rühren, um die Homogenität aufrechtzuerhalten. Gerade aber dadurch werden kleine Gasbläschen zu größeren vereinigt, so daß ein breites Spektrum der Blasengröße vorhanden ist. Dies ist aber für die Zellbildung besonders nachteilig.

Es ist auch schon ein kontinuierliches Verfahren, ein sogenanntes on-line-Verfahren, bekannt (DE-OS 3434443), bei welchem in der vom Vorratsbehälter zum Mischkopf führenden Zuleitung ein Begasungsbehälter zwischengeordnet ist. Auch hier wird aus einem im oberen Bereich des Begasungsbehälters enthaltenen Luftpolster Gas mittels eines Hohlrührers angesaugt. Dieser Begasungsbehälter ist als Durchlaufbehälter ausgebildet, d.h. die unbegaste Komponente wird in den unteren Behälterteil eingeführt und aus seinem mittleren Bereich nach der Begasung abgeführt. Eine Kreislaufführung findet dabei nicht statt. Bei diesem Verfahren hat die gasbeladene Komponente Kontakt mit dem Gaspolster. Diffusionsvorgänge an der Grenzfläche zwischen Gaspolster und gasbeladener Reaktionskomponente garantieren bei geringen Gasbeladungen keine genügende Konstanz des gewünschten Gasgehaltes. Da zum Erzielen einer hohen Gasbeladung meist noch mit hohen Rührerdrehzahlen und Strömungsbrechern gearbeitet wird, werden solche Diffusionsvorgänge wegen der stark verwirbelten Oberfläche der im Behälter befindlichen flüssigen Reaktionskomponente noch verstärkt. Auch mit dieser Methode ist es deshalb nicht möglich, kleinere Gasmengen in die Reaktionskomponente einzudispergieren.

Es besteht die Aufgabe, ein Verfahren und eine Vorrichtung zu finden, womit sich auch kleinere Gasmengen, insbesondere unter 10 Vol.-%, bezogen auf das Gesamtvolumen der begasten Komponente, in mindestens eine der fließfähigen Reaktionskomponenten für die Schaumstoffherstellung unter Konstanthaltung des gewünschten Gasgehaltes eindispergieren lassen.

Gelöst wird die Aufgabe dadurch, daß die unbeladene Reaktionskomponente möglichst nahe unterhalb des im wesentlichen konstant gehaltenen Niveauspiegels der Reaktionskomponente in den Begasungsbehälter eingeführt wird und die mit Gas beladene Reaktionskomponente unterhalb der Begasungsstelle abgeführt wird; daß dadurch im Begasungsbehälter ein Dreischichtenaufbau eingestellt und aufrechterhalten wird, durch welchen die Gasschicht durch die Schicht der unbeladenen Reaktionskomponente von der Schicht der mit Gas beladenen Reaktionskomponente getrennt wird ; und daß eine einem gewünschten Gasgehalt entsprechende Dichte unter Berücksichtigung der momentanen, gegebenenfalls ins Gewicht fallenden Ausgangsbedingungen, wie ursprüngliche Dichte, Temperatur, Druck, erforderlichenfalls durch entsprechende Variation der Rührerdrehzahl aufrechterhalten wird.

Die Zuführung der unbegasten Reaktionskomponente knapp unterhalb des Niveauspiegels verursacht einen gewünschten stetigen Austausch dieser obersten Schicht, so daß für Diffusionsvorgänge keine Zeit verbleibt. Die Zufuhr sollte möglichst nahe unterhalb des Niveauspiegels erfolgen, aber andererseits mit so viel Abstand, daß keine Verwirbelungen an der Grenzfläche zum Gaspolster auftreten. Völlig überraschend ist auch, daß die spezifisch leichtere gasbeladene Komponente sich im unteren Behälterbereich hält. Offenbar genügt es, wenn die Abzugskraft für die begaste Komponente der Auftriebskraft zumindest die Waage hält. Die unbegaste Zwischenschicht, welche natürlich zur begasten Schicht keine scharfe Grenzfläche aufweist, verhindert aber jeglichen Diffusionsvorgang zwischen Gaspolster und begaster Komponente. Gerade hierdurch wird eine störende Fehlerquelle der bisher bekannten Verfahren ausgeschaltet. Die Berücksichtigung der Ausgangsbedingungen sind für das neue Verfahren unerläßlich. Dies sind insbesondere die Dichte, Druck und Temperatur. Als Basis geht man aus von der unbegasten bzw. völlig entgasten Komponente unter verschiedenen Druck- und Temperaturbedingungen. Davon ausgehend läßt sich jedem gewünschten Gasgehalt die zugehörige Dichte zuordnen. Die Differenz zwischen der ursprünglichen Dichte und der Dichte der gasbeladenen Komponente ist das Maß für die zusätzlich eindispergierte Gasmenge. Treten während der Durchführung des Verfahrens Schwankungen von Ausgangsdichte, Druck und Temperatur auf, so wird die Rührerdrehzahl in Abhängigkeit davon variiert, um den Gasgehalt über die gesamte Betriebszeit konstant zu halten. Es versteht sich, daß Änderungen der Ausgangsbedingungen nur dann berücksichtigt zu werden brauchen, wenn sie merklich ins Gewicht fallen. Dies ist desto eher der Fall, je niedriger der Gasgehalt sein soll. Es versteht sich, daß nach der Begasung die begaste Reaktionskomponente bis zur Vermischung mit der zweiten Reaktionskomponente möglichst keinen Druckabfall mehr erfahren soll.

Vorzugsweise wird die Grenzfläche zwischen Gaspolster und unbegaster Reaktionskomponente möglichst klein gehalten.

Auf diese Weise werden Diffusionsvorgänge nahezu völlig unterbunden. Aber andererseits muß dabei zwischen Gaspolster und Reaktionskomponente im Gasbehälter ein Druckausgleich möglich sein.

Gemäß einer weiteren besonderen Durchführungsform des neuen Verfahrens wird die Reaktionskomponente gegen die Drehbewegung der Rührwelle abgeschirmt.

Dadurch wird die Bildung einer Trombe vermieden, welche unkontrolliert Gas in die Reaktionskomponente einziehen könnte.

Vorzugsweise erfolgt die Einleitung der unbegasten Reaktionskomponente derart, daß möglichst die gesamte an der Grenzfläche zum Gaspolster befindliche Schicht der Reaktionskomponente laufend erneuert wird.

Dies erreicht man durch einen möglichst breiten, flachen Zufluß der Komponente, gegebenenfalls durch mehrere Einlässe.

Gemäß einer anderen besonderen Durchführungsform wird der Hohlrührer mit Drehzahlen bis maximal 1200/min betrieben.

Es hat sich überraschenderweise gezeigt, daß entgegen allen Erwartungen bei nicht zu hohen Drehzahlen das Gas viel feiner in die Reaktionskomponente eindispergiert wird, so daß in vorteilhafter Weise ein enges Spektrum der Blasengröße erzielt wird.

Vorzugsweise wird im Begasungsbehälter eine nur vom Zulaufen, Ablaufen und vom Hohlrührer erzeugte, ansonsten ungestörte Strömung aufrechterhalten.

Dies wird erreicht, indem man auf bisher in Begasungsbehältern übliche Strömungsbrecher verzichtet. Der Durchmesser des Begasungsbehälters sollte zu dem vom Hohlrührer beschriebenen Rotationsdurchmesser in einem solchen Verhältnis stehen, daß der Behälterinhalt nicht mitrotiert.

Vorzugsweise wird der Niveauspiegel der Reaktionskomponente im Begasungsbehälter zumindest zwischen zwei Grenzwerten durch Gaszufuhr konstant gehalten.

Ob man den Niveauspiegel möglichst absolut konstant hält oder zwischen zwei Grenzwerten, ist in erster Linie eine Frage des technischen Aufwandes. Die Grenzwerte müssen nur ausreichend eng beieinander liegen, damit hierdurch keine Fehlerquellen entstehen.

Die neue Vorrichtung zum Beladen mindestens einer fließfähigen Reaktionskomponente mit Gas, insbesondere in geringen Mengen, für die Herstellung von Schaumstoffen, insbesondere Polyurethanschaumstoffen, geht aus von einem Begasungsbehälter, welcher in einer von einem Vorratsbehälter zu einem Mischkopf führenden Zuleitung anzuordnen ist, wobei dieser Begasungsbehälter einen Hohlrührer aufweist, welcher im oberen Bereich innerhalb des Begasungsbehälters eine Ansaugöffnung aufweist und dessen im unteren Bereich des Begasungsbehälters angeordnete Rührflügel mit Gasaustrittsöffnungen versehen sind ; und wobei in den oberen Bereich des Begasungsbehälters eine Gaszuführleitung einmündet.

Das Neue ist darin zu sehen, daß dem Begasungsbehälter ein Füllstandsregler für den Niveauspiegel der Reaktionskomponente, welcher über eine Impulsleitung mit einem Stellantrieb eines in der Gaszuführleitung angeordneten Absperrventils verbunden ist, zugeordnet ist ; daß die Einmündung der Zuleitung für die unbegaste Reaktionskomponente knapp unterhalb des Niveauspiegels der Reaktionskomponente angeordnet ist,

daß die Ausmündung der Ableitung für die mit Gas beladene Reaktionskomponente unterhalb der Rührflügel angeordnet ist ; daß sowohl in der Zuleitung als auch in der Ableitung Dichtemeßgeräte angeordnet, sind, welche über Impulsleitungen mit einem Rechen- und Steuergerät verbunden sind, welches seinerseits über eine Impulsleitung mit dem drehzahlverstellbaren Antrieb des Hohlrührers verbunden ist.

Mittels des Füllstandsreglers wird das verbrauchte Gas ersetzt, während die Zuflußmenge der unbegasten Reaktionskomponente im wesentlichen konstant bleibt. Die Einmündung der Zuleitung knapp unterhalb des Niveauspiegels sorgt für den laufenden Austausch der obersten Schicht. Da die Ausmündung der Ableitung für die begaste Reaktionskomponente unterhalb des Hohlrührers angeordnet ist, und zwar vorzugsweise zentral im Behälterboden, kann die begaste Reaktionskomponente nicht mehr mit dem Gaspolster in Berührung kommen und es ergeben sich optimale Strömungsverhältnisse. Die Dichtemeßgeräte in der Zu- und Ableitung erlauben es, die Dichteänderung durch die Begasung festzustellen und damit den effektiven Gasgehalt nach erfolgter Begasung. Das Rechen- und Steuergerät ermöglicht es, die Meßwerte mit Sollgrößen unter Berücksichtigung der Ausgangsbedingungen von Dichte, Temperatur und Druck zu vergleichen. Ändern sich die Ausgangsbedingungen während der Betriebszeit in einer nicht vernachlässigbaren Weise, so gibt das Rechen- und Steuergerät über den Drehzahlregler Befehl an den Antrieb des Hohlrührers, die Drehzahl entsprechend zu variieren, um den effektiven Gasgehalt konstant zu halten.

Vorzugsweise ist ein Temperaturmeßgerät vorgesehen, welches über eine Impulsleitung mit dem Rechen- und Steuergerät verbunden ist.

Ein Druckmeßgerät, welches über eine Impulsleitung mit dem Rechen- und Steuergerät verbunden ist, ist ebenfalls vorzugsweise vorgesehen.

Auf diese Weise ist es möglich, während der Betriebszeit auftretende, ins Gewicht fallende Temperatur- und Druckänderungen, welche die Dichte und damit den Gasgehalt verzerren könnten, durch Drehzahlvariation zur berücksichtigen.

Gemäß einer besonderen Ausführungsform der Vorrichtung ist die Grenzfläche zwischen Gaspolster und Komponentenbereich kleiner als die Querschnittsfläche des Komponentenbereiches in Höhe der Rührflügel des Hohlrührers.

Auf diese Weise werden Diffusionsvorgänge zwischen Gaspolster und Reaktionskomponente nahezu völlig ausgeschaltet.

Diese Grenzflächenverkleinerung läßt sich vorzugsweise durch einen schwimmenden Deckel verwirklichen, durch welchen der überwiegende Teil der Grenzfläche abgedeckt ist.

Eine die gleiche Wirkung verursachende, weitere Ausführungsform besteht darin, daß der Begasungsbehälter im Bereich des Niveauspiegels geringeren Durchmesser aufweist als im Bereich der Rührflügel des Hohlrührers.

Gemäß einer weiteren besonderen Ausführungsform ist die Rührwelle im Komponentenbereich mit einer innen am Begasungsbehälter fixierten Hülse ummantelt. Diese Hülse vermeidet die Ausbildung einer Trombe.

Vorzugsweise weist der Füllstandsregler zwei Grenzwertgeber auf.

Zwischen diesen auf engen Abstand eingestellten Grenzwertgebern wird der Niveauspiegel konstant gehalten.

Eine weitere besondere Ausführungsform ist dadurch gekennzeichnet, daß die Einmündung der Zuleitung als breite Maulöffnung gestaltet ist.

Dadurch wird ein laminarer flacher Zufluß erzielt, welcher sich über den Behälterquerschnitt ausbreitet und dabei die oberste Komponentenschicht laufend erneuert, so daß gerade in diesem für Diffusionsvorgänge kritischen Bereich ein enges Verweilzeitspektrum gegeben ist.

Eine Variante hierzu besteht darin, daß die Einmündung der Zuleitung aus mehreren über den Umfang des Begasungsbehälters verteilten Öffnungen besteht.

Hierdurch wird bei entsprechend vielen Öffnungen, welche vorzugsweise über den Umfang gleichmäßig verteilt angeordnet sind, eine radiale Strömung zur Rührwelle hin erzielt, wo sie dann abtaucht.

Eine weitere Variante der Einmündung der Zuleitung besteht aus einer ringförmigen Verteilerrinne mit Überlauf.

Auch hierbei erfolgt durch die Anordnung der Verteilerrinne am inneren Umfang des Behälters eine radial zur Rührwelle gerichtete Strömung.

Bei kontinuierlicher Weiterverarbeitung der gasbeladenen Komponente, wie beispielsweise bei der Schaumstoffherstellung oder bei der Produktion von Schaumstoffplatten auf Doppeltransportbändern, wird die begaste Komponente mittels der Dosierpumpe kontinuierlich in den Mischkopf gefördert.

Muß man diskontinuierlich arbeiten, wie beispielsweise beim Füllen von Formwerkzeugen, ordnet man, wie bereits in DE-OS 3434443 vorgeschlagen, zwischen Begasungsbehälter und Mischkopf einen kleinen Speicherbehälter für die begaste Komponente an. Die im Speicherbehälter befindliche begaste Komponente kann während der Pausenzeiten erforderlichenfalls über den Mischkopf bzw. über den Mischkopf vorgeordnete Umschaltventile im Kreislauf gefahren werden. Bei im Takt arbeitenden Formschäumanlagen ergibt sich eine optimale Betriebsweise, wenn sich der Verbrauch an begaster Komponente, über die Gesamtzeit gesehen, mit der dem Speicherbehälter zugeführten begasten Komponentenmenge die Waage hält. In diesem Falle kann nämlich der Begasungsbehälter kontinuierlich arbeiten.

In der Zeichnung ist die neue Vorrichtung in einem Ausführungsbeispiel mit mehreren Abwandlungen rein schematisch dargestellt und nachstehend näher erläutert.

Es zeigen :

Fig. 1      die Vorrichtung im schematischen Aufbau,

Fig. 2      eine Abwandlung der Einmündung der Zuleitung für die Komponenten in den Begasungsbehälter im Schnitt gemäß Linie A-B in Fig. 3,

Fig. 3      einen Schnitt gemäß Linie C-D in Fig. 2,

Fig. 4      eine zweite Abwandlung der Einmündung im Schnitt gemäß Linie E-F in Fig. 5,

Fig. 5      einen Schnitt gemäß Linie G-H in Fig. 4,

Fig. 6      eine dritte Abwandlung der Einmündung im Schnitt gemäß Linie I-K in Fig. 7 und

Fig. 7      einen Schnitt gemäß Linie L-M in Fig. 6.

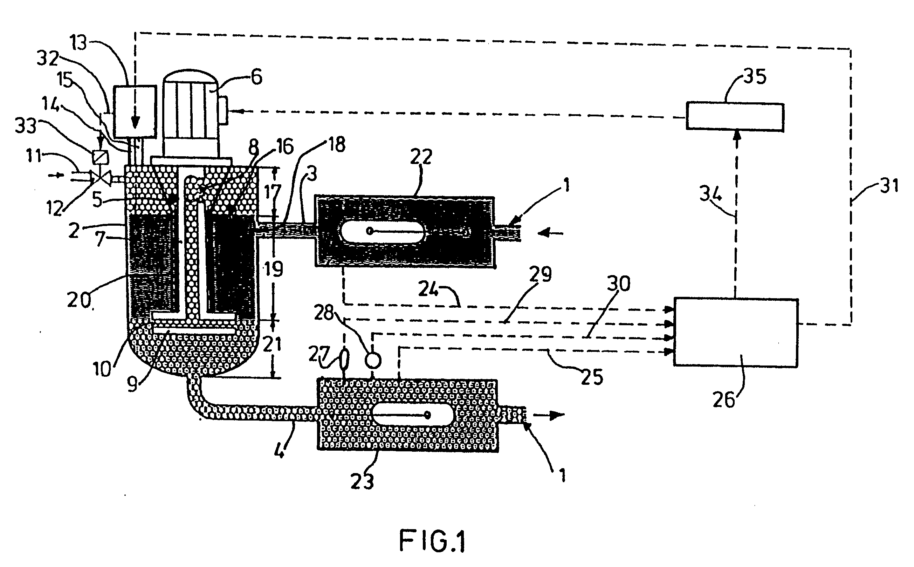

In Fig. 1 führt eine Leitung 1 von einem nicht dargestellten Vorratsbehälter über eine nicht dargestellte Dosierpumpe zu einem nicht dargestellten Mischkopf. In dieser Leitung 1 ist zwischen Vorratsbehälter und Dosierpumpe ein Begasungsbehälter 2 angeordnet. Der zum Begasungsbehälter 2 führende Leitungsabschnitt ist als Zuleitung 3, der abführende Leitungsabschnitt als Ableitung 4 bezeichnet. Der Begasungsbehälter 2 ist mit einem Hohlrührer 5 versehen, welchem ein drehzahlverstellbarer Antrieb 6 zugeordnet ist. Der Hohlrührer 5 weist im oberen Bereich seiner Rührwelle 7 eine Gasansaugöffnung 8 auf. Im unteren Bereich des Begasungsbehälters 2 sind Rührflügel 9 am Ende der Rührwelle 7 angeordnet, welche mit Gasaustrittsöffnungen 10 versehen sind. Im oberen Bereich des Begasungsbehälters 2 mündet außerdem eine Gaszuführleitung 11 ein, welche mit einem Absperrventil 12 versehen ist. Mittels eines Füllstandsreglers 13, welcher zwei Grenzwertgeber 14, 15 aufweist, wird der Niveauspiegel 16 der im Begasungsbehälter 2 befindlichen Reaktionskomponente konstant gehalten. Über dem Niveauspiegel 16 befindet sich ein Gaspolster bzw. eine Gasschicht 17, aus welcher der Hohlrührer 5 Gas ansaugt und in die darunter befindliche Reaktionskomponente eindispergiert. Die Einmündung 18 der Zuleitung 3 ist knapp unterhalb des Niveauspiegels 16 angeordnet. Die Rührwelle 7 ist im Bereich der Schicht 19 der unbegasten Komponente mit einer Hülse 20 ummantelt, welche innen am Begasungsbehälter 2 fixiert ist. Etwa von der Höhe der Rührflügel 9 abwärts bildet sich die Schicht 21 der begasten Komponente aus. Sowohl in der Zuleitung 3 als auch in der Ableitung 4 sind Dichtemeßgeräte 22 bzw. 23 angeordnet. Sie sind über Impulsleitungen 24, 25 mit einem Rechen- und Steuergerät 26 verbunden. Außerdem ist in der Ableitung 4 bzw. im Dichtemesser 23 ein Temperaturmeßgerät 27 und ein Druckmeßgerät 28 vorgesehen, welche ebenfalls über Impulsleitungen 29, 30 mit dem Rechen- und Steuergerät 26 verbunden sind. Schließlich steht auch der Füllstandsregler 13 über eine Impulsleitung 31 mit dem Rechen- und Steuergerät 26 in Verbindung. Zum Ein- und Ausschalten des Füllstandsreglers 13 führt eine Impulsleitung 32 zu einem Stellmotor 33 des Absperrventils 12. Vom Rechen- und Steuergerät 26 führt eine Impulsleitung 34 über einen Drehzahlregler 35 zum Antrieb 6 des Hohlrührers 5.

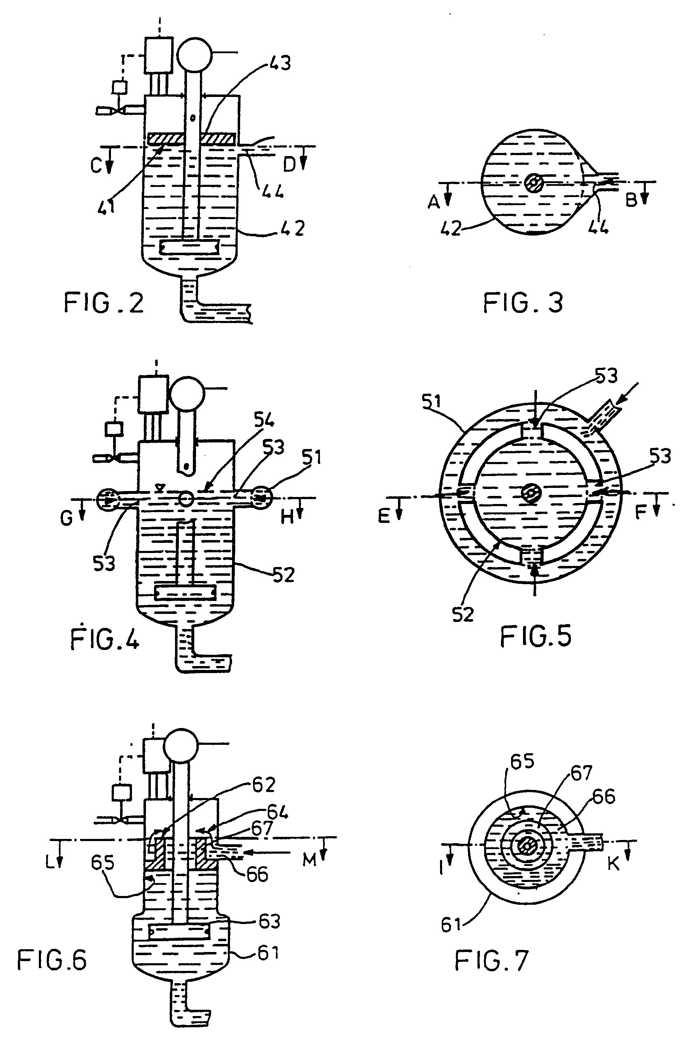

In Fig. 2, 3 ist der Niveauspiegel 41 der Reaktionskomponente im Begasungsbehälter 42 durch einen schwimmenden Deckel 43 abgedeckt. Die Einmündung 44 ist hier als Maulöffnung ausgebildet.

In Fig. 4, 5 zweigen von einer Ringleitung 51, welche den Begasungsbehälter 52 umgibt, in regelmäßigen Abständen Einmündungen 53 ab und münden knapp unterhalb des Niveauspiegels 54 in den Begasungsbehälter 52 ein.

In Fig. 6, 7 ist der Begasungsbehälter 61 im Bereich des Niveauspiegels 62 von geringerem Durchmesser als im Bereich der Rührflügel 63. Die Einmündung 64 ist durch eine an der Behälterinnenwand 65 umlaufende Rinne 66 mit Überlauf 67 gebildet.

**Patentansprüche**

1. Verfahren zum Beladen mindestens einer fließfähigen Reaktionskomponente mit Gas, insbesondere in geringen Mengen, für die Herstellung von Schaumstoffen, insbesondere Polyurethanschaumstoffen, wobei die Reaktionskomponente kontinuierlich in einen unter Druck stehenden Begasungsbehälter (2, 42, 52, 61) eingeführt wird, in dessen oberem Bereich ein Gaspolster (17) aufrechterhalten wird, aus welchem mittels eines Hohlrührers (5) Gas angesaugt und in die darunter befindliche Reaktionskomponente (19, 21) im unteren Bereich des Begasungsbehälters (2, 42, 52, 61) eindispergiert wird und die nunmehr mit Gas beladene Reaktionskomponente (21) zur Weiterverarbeitung aus dem Begasungsbehälter (2, 42, 52, 61) abgeführt wird, dadurch gekennzeichnet, daß die unbeladene Reaktionskomponente (19) möglichst nahe unterhalb des im wesentlichen konstant gehaltenen Niveauspiegels (16) der Reaktionskomponente (19, 21) in den Begasungsbehälter (2, 42, 50, 61) eingeführt wird und die mit Gas beladene Reaktionskomponente (21) unterhalb der Begasungsstelle abgeführt wird ; daß dadurch im Begasungsbehälter (2, 42, 52, 61) ein Dreischichtenaufbau eingestellt wird, durch welchen die Gasschicht (17) durch die Schicht (19) der unbeladenen Reaktionskomponente von der Schicht (21) der mit Gas beladenen Reaktionskomponente getrennt wird ; und daß eine einem gewünschten Gasgehalt entsprechende Dichte unter Berücksichtigung der momentanen, gegebenenfalls ins Gewicht fallenden Ausgangsbedingungen, wie ursprüngliche Dichte, Temperatur, Druck, erforderlichenfalls durch entsprechende Variation der Rührerdrehzahl aufrechterhalten wird.

2. Verfahren nach Anspruch 1, dadurch gekennzeichnet, daß die Grenzfläche (16) zwischen Gaspolster (17) und unbegaster Reaktionskomponente (19) möglichst klein gehalten wird.

3. Verfahren nach Anspruch 1 oder 2, dadurch gekennzeichnet, daß die Reaktionskomponente gegen die Drehbewegung der Rührwelle (7) abgeschirmt wird.

4. Verfahren nach einem der Ansprüche 1 bis 3, dadurch gekennzeichnet, daß die Einleitung der unbegasten Reaktionskomponente derart erfolgt, daß möglichst die gesamte an der Grenzfläche (16) zum Gaspolster (17) befindliche Schicht laufend erneuert wird.

5. Verfahren nach einem der Ansprüche 1 bis 4, dadurch gekennzeichnet, daß der Hohlrührer (5) mit Drehzahlen bis maximal 1200/min. betrieben wird.

6. Verfahren nach einem der Ansprüche 1 bis 5, dadurch gekennzeichnet, daß im Begasungsbehälter (2, 52, 56, 61) eine nur vom Zulaufen und Ablaufen und vom Hohlrührer (5) erzeugte, ansonsten ungestörte Strömung aufrechterhalten wird.

7. Verfahren nach einem der Ansprüche 1 bis 6, dadurch gekennzeichnet, daß der Niveauspiegel (16) der Reaktionskomponente im Begasungsbehälter (2, 42, 52, 61) zumindest zwischen zwei Grenzwerten durch Gaszufuhr konstant gehalten wird.

8. Vorrichtung zum Beladen mindestens einer fließfähigen Reaktionskomponente mit Gas, insbesondere in geringen Mengen, für die Herstellung von Schaumstoffen, insbesondere Polyurethanschaumstoffen, bestehend aus einem Begasungsbehälter (2, 42, 52, 61), welcher in einer von einem Vorratsbehälter zu einem Mischkopf führenden Leitung (1) anzuordnen ist, wobei dieser Begasungsbehälter (2, 42, 52, 61) einen Hohlkörper (5) aufweist, welcher im oberen Bereich innerhalb des Begasungsbehälters (2, 42, 52, 61) eine Ansaugöffnung (8) aufweist und dessen im unteren Bereich des Begasungsbehälters (2, 42, 52, 61) angeordnete Rührflügel (9) mit Gasaustrittsöffnungen (10) versehen sind ; und wobei in den oberen Bereich des Begasungsbehälters (2, 42, 52, 61) eine Gaszuführleitung (11) einmündet, dadurch gekennzeichnet, daß dem Begasungsbehälter (2, 42, 52, 61) ein Füllstandsregler (13) für den Niveauspiegel (16) der Reaktionskomponente, welcher über eine Impulsleitung (32) mit einem Stellantrieb (33) eines in der Gaszuführleitung (11) angeordneten Absperrventils (12) verbunden ist, zugeordnet ist ; daß die Einmündung (18, 44, 53, 64) der Zuleitung (3) für die unbegaste Reaktionskomponente knapp unterhalb des Niveauspiegels (16) der Reaktionskomponente angeordnet ist ; daß die Ausmündung der Ableitung (4) für die mit Gas beladene Reaktionskomponente (21) unterhalb der Rührflügel (10) angeordnet ist ; daß sowohl in der Zuleitung (3) als auch in der Ableitung (4) Dichtemeßgeräte (22, 23) angeordnet sind, welche über Impulsleitungen (24, 25) mit einem Rechen- und Steuergerät (26) verbunden sind, welches seinerseits über eine Impulsleitung (34) mit dem drehzahlverstellbaren Antrieb (6) des Hohlrührers (5) verbunden ist.

9. Vorrichtung nach Anspruch 8, dadurch gekennzeichnet, daß ein Temperaturmeßgerät (27) vorgesehen ist, welches über eine Impulsleitung (29) mit dem Rechen- und Steuergerät (26) verbunden ist.

10. Vorrichtung nach einem der Ansprüche 8 oder 9, dadurch gekennzeichnet, daß ein Druckmeßgerät (28) vorgesehen ist, welches über eine Impulsleitung (30) mit dem Rechen- und Steuergerät (26) verbunden ist.

11. Vorrichtung nach einem der Ansprüche 8 bis 10, dadurch gekennzeichnet, daß die Grenzfläche (41, 62) zwischen Gasbereich und Komponentenbereich kleiner ist als die Querschnittsfläche des Komponentenbereichs in Höhe der Rührflügel (63) des Hohlrührers.

12. Vorrichtung nach Anspruch 11, dadurch gekennzeichnet, daß der überwiegende Teil der Grenzfläche (41) mit einem schwimmenden Deckel (43) abgedeckt ist.

13. Vorrichtung nach Anspruch 11, dadurch gekennzeichnet, daß der Begasungsbehälter (61) im Bereich des Niveauspiegels (62) geringeren Durchmesser aufweist als im Bereich der Rührflügel (63) des Hohlrührers.

14. Vorrichtung nach einem der Ansprüche 8 bis 13, dadurch gekennzeichnet, daß die Rührwelle (7) im Komponentenbereich mit einer innen am Begasungsbehälter (2) fixierten Hülse (20) ummantelt ist.

15. Vorrichtung nach einem der Ansprüche 8 bis 14, dadurch gekennzeichnet, daß der Füllstandsregler (13) zwei Grenzwertgeber (14, 15) aufweist.

16. Vorrichtung nach einem der Ansprüche 8 bis 15, dadurch gekennzeichnet, daß die Einmündung (49) der Zuleitung als breite Maulöffnung (44) gestaltet ist.

17. Vorrichtung nach einem der Ansprüche 8 bis 15, dadurch gekennzeichnet, daß die Einmündung (13) der Zuleitung aus mehreren über den Umfang des Begasungsbehälters (52) verteilten Öffnungen (53) besteht.

18. Vorrichtung nach einem der Ansprüche 8 bis 15, dadurch gekennzeichnet, daß die Einmündung (64) der Zuleitung aus einer ringförmigen Verteilerrinne (66) mit Überlauf (67) besteht.

## Claims

1. Method of charging at least one flowable reaction component with gas, in particular in small quantities, for the production of foams, in particular polyurethane foams, wherein the reaction component is continuously introduced into a gasification container (2, 42, 52, 61) which is under pressure and in the upper region of which there is maintained a gas cushion (17) from which gas is aspirated by means of a hollow stirrer (5) and is dispersed into the reaction component (19, 21) located therebelow in the lower region of the gasification container (2, 42, 52, 61) and the reaction component (21) which is now charged with gas is discharged from the gasification container (2, 42, 52, 61) for further processing, characterised in that the uncharged reaction component (19) is introduced into the gasification container (2, 42, 50, 61) as close as possible beneath the surface level (16), which is kept substantially constant, of the reaction component (19, 21) and the gas-charged reaction component (21) is discharged beneath the gasification point ; in that a three-layered structure is therefore adjusted in the gasification container (2, 42, 52, 61) by means of which the gas layer (17) is separated from the layer (21) of the gas-charged reaction component by means of the layer (19) of uncharged reaction component ; and in that a density corresponding to a desired gas content is maintained while allowing for the instantaneous starting conditions which are possibly of great importance, such as original density, temperature, pressure, if necessary by suitable variation of the stirrer speed.

2. Method according to claim 1, characterised in that the interface (16) between gas cushion (17) and ungasified reaction component (19) is kept as small as possible.

3. Method according to claim 1 or 2, characterised in that the reaction component is shielded from the rotating movement of the stirrer shaft (7).

4. Method according to one of claims 1 to 3, characterised in that the ungasified reaction component is introduced such that as far as possible the entire layer located at the interface (16) with the gas cushion (17) is renewed continuously.

5. Method according to one of claims 1 to 4, characterised in that the hollow stirrer (5) is operated at maximum speeds of up to 1,200/min.

6. Method according to one of claims 1 to 5, characterised in that in the gasification container (2, 52, 56, 61) there is maintained a flow which is produced only by the supply and delivery and by the hollow stirrer (5) but is otherwise undisturbed.

7. Method according to one of claims 1 to 6, characterised in that the surface level (16) of the reaction component in the gasification container (2, 42, 52, 61) is kept constant, at least between two limit values, by the supply of gas.

8. Apparatus for charging at least one flowable reaction component with gas, in particular in small quantities, for the production of foams, in particular polyurethane foams, consisting of a gasification container (2, 42, 52, 61) which is to be arranged in a line (1) leading from a storage container to a mixer head, wherein this gasification container (2, 42, 52, 61) has a hollow body (5) which has an aspirating port (8) in the upper region inside the gasification container (2, 42, 52, 61) and of which the stirrer blades (9) arranged in the lower region of the gasification container (2, 42, 52, 61) are provided with gas outlet openings (10) ; and wherein a gas supply line (11) opens into the upper region of the gasification container (2, 42, 52, 61), characterised in that a filling regulator (13) for the surface level (16) of the reaction component which is connected via a pulse line (32) to an actuator (33) of a check valve (12) arranged in the gas supply line (11) is allocated to the gasification container (2, 42, 52, 61) ; in that the entrance (18, 44, 53, 64) of the supply line (3) for the ungasified reaction component is arranged just below the surface level (16) of the reaction component ; in that the exit of the discharge line (4) for the gas-charged reaction component (21) is arranged beneath the stirrer blades (10) ; in that density measuring devices (22, 23) are arranged both in the supply line (3) and in the discharge line (4) and are connected via pulse lines (24, 25) to a computing and control element (26) which, in turn, is connected via a pulse line (34) to the speed-adjustable drive (6) of the hollow stirrer (5).

9. Apparatus according to claim 8, characterised in that a temperature measuring device (27) is provided, which is connected via a pulse line (29) to the computing and control element (26).

10. Apparatus according to one of claims 8 or 9, characterised in that a pressure measuring device (28) is provided which is connected via a pulse line (30) to the computing and control element (26).

11. Apparatus according to one of claims 8 to 10, characterised in that the interface (41, 62) between gas region and component region is smaller than the cross-sectional area of the component region at the level of the stirrer blades (63) of the hollow stirrer.

12. Apparatus according to claim 11, characterised in that the majority of the interface (41) is covered by a floating cover (43).

13. Apparatus according to claim 11, characterised in that the gasification container (61) has a smaller diameter in the region of the surface level (62) than in the region of the stirrer blades (63) of the hollow stirrer.

14. Apparatus according to one of claims 8 to 13, characterised in that the stirrer shaft (7) is surrounded in the component region by a sleeve (20) fixed internally on the gasification container (2).

15. Apparatus according to one of claims 8 to 14, characterised in that the filling regulator (13) has two limit monitors (14, 15).

16. Apparatus according to one of claims 8 to 15, characterised in that the entrance (49) of the supply line is constructed as a wide mouth (44).

17. Apparatus according to one of claims 8 to 15, characterised in that the entrance (13) of the supply line consists of a plurality of openings (53) distributed over the periphery of the gasification container (52).

18. Apparatus according to one of claims 8 to 15, characterised in that the entrance (64) of the supply line consists of an annular distributing groove (66) with overflow (67).

## Revendications

1. Procédé pour charger de gaz, en particulier en faible proportion, au moins un composant fluide de la réaction, pour la fabrication de matériaux mousses, en particulier de mousses de polyuréthane, procédé dans lequel on introduit en continu le composant de la réaction dans un récipient de gazéification (2, 42, 52, 61), sous pression, dans la zone supérieure duquel est maintenu un matelas de gaz (17), dans lequel le gaz est aspiré au moyen d'un agitateur creux (5) puis dispersé intérieurement dans le composant de la réaction (19, 21) qui se trouve par dessous, dans la zone inférieure du récipient de gazéification (2, 42, 61), et procédé dans lequel, pour en poursuivre le traitement, on extrait hors du récipient de gazéification (2, 42, 52, 61) le composant de la réaction (21) maintenant chargé de gaz, procédé caractérisé par le fait que l'on introduit le composant de la réaction, non chargé (19), le plus près possible en-dessous du niveau (16), maintenu sensiblement constant, du composant de la réaction (19, 21) dans le récipient de gazéification (2, 42, 50, 61) et que l'on extrait le composant de la réaction, chargé de gaz (21), en-dessous de l'emplacement de la gazéification ; par le fait qu'il s'établit alors, dans le récipient de gazéification (2, 42, 52, 61), une structure à trois couches grâce à laquelle la couche de gaz (17) est séparée, par la couche (19) du composant de la réaction non chargé, de la couche (21) du composant de la réaction chargé de gaz ; et par le fait que l'on maintient si nécessaire par une variation appropriée de la vitesse de rotation du mélangeur une densité correspondant à une teneur en gaz désirée en tenant compte des conditions de départ momentanées, éventuellement importantes comme la densité, la température et la pression d'origine.

2. Procédé selon la revendication 1, caractérisé par le fait que l'on maintient aussi petite que possible la surface limite (16) entre le matelas de gaz (17) et le composant de la réaction non chargé de gaz (19).

3. Procédé selon la revendication 1 ou 2, caractérisé par le fait que l'on protège le composant de la réaction à l'égard du mouvement de rotation de l'arbre de l'agitateur (7).

4. Procédé selon l'une des revendications 1 à 3, caractérisé par le fait que l'introduction du composant de la réaction non chargé de gaz se fait de façon que la totalité de la couche qui se trouve à la surface limite (16) avec le matelas de gaz (17) soit le plus possible renouvelée en permanence.

5. Procédé selon l'une des revendications 1 à 4, caractérisé par le fait que l'agitateur creux (5) est entraîné à des vitesses de rotation allant jusqu'au maximum 1200 tours/minute.

6. Procédé selon l'une des revendications 1 à 5, caractérisé par le fait que l'on maintient dans le récipient de gazéification (2, 52, 56, 61) un écoulement qui n'est produit que par l'introduction et l'évacuation et par l'agitateur creux (5) et non perturbé par ailleurs.

7. Procédé selon l'une des revendications 1 à 6, caractérisé par le fait que l'on maintient constant le niveau (16) du composant de la réaction dans le récipient de gazéification (2, 42, 52, 61), au moins entre deux valeurs limites, par introduction de gaz.

8. Dispositif pour charger de gaz, en particulier en faible proportion, au moins un composant fluide de la réaction pour la fabrication de matériaux mousses, en particulier de mousses de polyuréthane, constitué d'un récipient de gazéification (2, 42, 52, 61) qui doit être disposé dans une conduite (1) conduisant d'un récipient de stockage à une tête de mélangeur, étant précisé que ce récipient de gazéification (2, 42, 52, 61) présente un corps creux (5) qui, dans la zone supérieure, à l'intérieur du récipient de gazéification (2, 42, 52, 61), présente une ouverture d'admission (8) et dont des ailettes (9) de l'agitateur disposées dans la zone inférieure du récipient de gazéification (2, 42, 52, 61), sont munies d'ouvertures (10) de sortie du gaz ; et étant précisé que dans la zone supérieure du récipient de gazéification (2, 42, 52, 61) débouche une conduite (11) d'introduction du gaz, dispositif caractérisé par le fait qu'au récipient de gazéification (2, 42, 52, 61) correspond, pour le niveau (16) du composant de la réaction, un régulateur de remplissage (15) qui est relié, par l'intermédiaire d'un conducteur d'impulsions (32), avec un mécanisme réglant (33) d'un robinet d'arrêt (12) disposé dans la conduite (11) d'introduction du gaz ; par le fait que la couche d'entrée (18, 44, 53, 64) de la conduite d'entrée (3) pour le composant de la réaction non chargé de gaz est disposée juste en-dessous du niveau (16) du composant de la réaction ; par le fait que la bouche de sortie de la conduite de sortie (4) pour le composant de la réaction (21) chargé de gaz est disposée en-dessous des ailettes (9) de l'agitateur ; par le fait qu'aussi bien dans la conduite d'entrée (3) que dans la conduite de sortie (4) sont disposés des densimètres (22, 23) qui, par l'intermédiaire de conducteurs d'impulsions (24, 25) sont reliés avec un appareil de calcul et de commande (26) qui, de son côté, est relié, par l'intermédiaire d'un conducteur d'impulsions (34), avec le mécanisme (6), à vitesse de rotation réglable, de l'agitateur creux (5).

9. Dispositif selon la revendication 8, caractérisé par le fait qu'il est prévu un thermomètre (27) qui est relié, par l'intermédiaire d'un conducteur d'impulsions (29), avec l'appareil de calcul et de commande (26).

10. Dispositif selon l'une des revendications 8 ou 9, caractérisé par le fait qu'il est prévu un manomètre (28) qui est relié, par l'intermédiaire d'un conducteur d'impulsions (30), avec l'appareil de calcul et de commande (26).

11. Dispositif selon l'une des revendications 8 à 10, caractérisé par le fait que la surface limite (41, 62) entre la zone du gaz et la zone du composant est inférieure à la surface de la section de la zone du composant à hauteur des ailettes (63) de l'agitateur creux.

12. Dispositif selon la revendication 11, caractérisé par le fait que la partie principale de la surface limite (41) est recouverte d'un couvercle flottant (43).

13. Dispositif selon la revendication 11, caractérisé par le fait que le récipient de gazéification (61) présente, dans la zone du niveau (62), un diamètre inférieur à celui qu'il présente dans la zone des ailettes (63) de l'agitateur creux.

14. Dispositif selon l'une des revendications 8 à 13, caractérisé par le fait que, dans la zone du composant, l'arbre d'agitateur (7) est entouré d'un manchon (20) fixé intérieurement au récipient de gazéification (2).

15. Dispositif selon l'une des revendications 8 à 14, caractérisé par le fait que le régulateur de remplissage (13) présente deux indicateurs de valeur limite (14, 15).

16. Dispositif selon l'une des revendications 8 à 15, caractérisé par le fait que la bouche d'entrée (49) de la conduite d'entrée a la forme d'une large gueule (44).

17. Dispositif selon l'une des revendications 8 à 15, caractérisé par le fait que la bouche d'entrée (13) de la conduite d'entrée est constituée de plusieurs ouvertures (53) réparties sur la périphérie du récipient de gazéification (52).

18. Dispositif selon l'une des revendications 8 à 15, caractérisé par le fait que la bouche d'entrée (64) de la conduite d'entrée est constituée d'une rigole annulaire de répartition (66) avec trop-plein (67).

FIG.1

EP 0 332 032 B1

FIG.2

FIG. 3

FIG.4

FIG.5

FIG.6

FIG.7

11